# EUROPEAN PATENT SPECIFICATION

(11) **EP 0 827 331 B1**
(45) Date of publication and mention of the grant of the patent: **18.10.2006**
(21) Application number: 97114383.9
(22) Date of filing: 20.08.1997
(51) Int. Cl.: H04N 1/327

(54) **Facsimile machine**
Faksimilegerät
Appareil de facsimile

(30) Priority: 27.08.1996 JP 22469996
(43) Date of publication of application: 04.03.1998
(73) Proprietor: SHARP KABUSHIKI KAISHA, Osaka-shi, Osaka-fu 545-0013 (JP)
(72) Inventor: Miura, Toshiya, Kyoto-shi, Kyoto (JP)
(74) Representative: Müller, Frithjof E.

(56) References cited:
- EP-A- 0 313 313
- EP-A- 0 396 105
- EP-A- 0 454 452
- EP-A- 0 555 150
- US-A- 4 353 097
- US-A- 5 315 643

## Description

### BACKGROUND OF THE INVENTION

### 1. Field of the Invention

The present invention relates to a facsimile machine provided with a telephone conversation function.

### 2. Description of the Related Art

Conventionally, a protocol for telephone conversation reservation (telephone conversation reservation function) has been available for facsimile machines provided with a telephone conversation function. In a facsimile machine provided with such a telephone conversation reservation function, when a telephone conversation reservation is made by a predetermined procedure at either a calling party side terminal or a receiving party side terminal during facsimile communication, the terminal generates a calling sound after facsimile communication. When either party of the terminals responds to the calling sound and lifted the handset, the facsimile communication mode of the terminal is shifted to the telephone conversation mode, and telephone conversation can be carried out between the calling party side and the receiving party side.

However, in the above-mentioned conventional facsimile machine provided with a telephone conversation function, a telephone conversation reservation function is required at both the calling and receiving party side terminals in order to shift the facsimile communication mode to the telephone conversation mode after facsimile communication. Therefore, terminals whose modes can be shifted to the telephone conversation mode after facsimile communication by telephone conversation reservation are limited in number. For example, when the receiving party side terminal is not provided with the telephone conversation reservation function, the calling party side must make a call again to confirm whether transmitted images have been received properly by the receiving party side, or the receiving party side must make a call to the calling party side. As a result, troublesome operation is required at the calling or receiving party side. In addition, extra charges are required.

Even when the telephone conversation reservation function is provided at both the calling and receiving party side terminals, if an error or the like occurs during facsimile communication, shifting to the telephone conversation mode cannot be attained. Therefore, if an error occurs during facsimile communication and images cannot be received properly, the calling party side must make a call again to the receiving party side, or the receiving party side must make a call to the calling party side. As a result, troublesome operation is required at the calling or receiving party side. In addition, extra charges are required.

EP 0 454 452 A describes a data communication apparatus comprising a first switching means which switches over between data communication and speech communication depending as whether or not a signal indicating data communication mode is received within a predetermined period of time, a second switching means which switches over between data communication and speech communication depending as whether or not a response signal to a procedure signal is received in a predetermined period of time, detecting means for detecting a state of the apparatus and selecting means for selecting one of the first and second switching means. This known data communication apparatus has two automatic call reception modes. In the first automatic call reception mode, if there is no sheet, priority is given to the facsimile communication mode, and the significant facsimile signal (CNG-signal) is detected while sending a ring back tone several times until a CNG-signal is detected. Thereupon facsimile communication is executed. If the CNG-signal cannot be detected within a predetermined period of time, the mode is automatically switched to the speech communication mode to issue a quasi ring tone to call an operator.

On the other hand, in the case of an automatic call reception, if there is a sheet, priority is given to the facsimile communication mode. If a facsimile signal from the partner station is detected, facsimile communication is conducted. If a significant facsimile signal (CNG-signal) is not detected within a specified period of time, the mode is switched to the speech communication mode automatically to produce a quasi ring tone to call an operator. That is, in the latter case, the communication line is held only if the CNG-signal is not detected within a specified period of time, that is if the facsimile communication is not carried out and thereby avoided that the partner stations disconnects the line. This document does not describe the function that control means keeps the occupation of the communication line either for a predetermined period after facsimile communication or until detecting means on the receiving part his side detects the end of conversation after facsimile communication. It is to be noted that according to Figs. 2A and 2B of this document, the process immediately returns to step S42 after the data communication has been completed. The state of completed data communication is detected at the calling part his side terminal.

EP-A-0 555 150 describes a data communication apparatus having an auto-calling function. To assure the establishment of data communication a time period T1 which is set according to CCITT recommendations after dialing or after detection of a polarity reversal of a line can be extended when detection means of the data communication apparatus are detecting a voice signal within the original time period T1. If otherwise within this period T1 a CNG-Signal is detected, fax transmission of the transmitting data communication apparatus to receiving apparatus is started.

In a communication apparatus described in EP-A-0 313 313 a change of the kind of the data communication, for example a change from facsimile communication to telephone conversation is achieved by discrimination means provided in the communication apparatus for discriminating whether communication is requested from another communication apparatus connected to the same subscriber line. Further communication control means within said communication apparatus are adapted for automatically communicating with an apparatus of the subscriber line with which the another communication apparatus has been communicating upon this discrimination of a request for communication by said discrimination means.

A facsimile apparatus disclosed in US-A-0,353,097 is capable of automatically controlling the transmission of picture signals in response to sizes of an original document and of recording paper and thereby eliminates the concern of an operator as to the different paper sizes. Further, the known facsimile apparatus of this kind improves the operability in the case of a telephone talk through the facsimile apparatus as it is not only provided with the functions of preliminarily carrying out a telephone conversation but is also capable of providing sound from an incorporated loud speaker.

In a data communication terminal system which is capable of switching between a telephone receiver and a data terminal unit described in EP-A-0 396 105 in the data communication mode data are transmitted together with a communication carrier signal. When an off-hook detecting means detects an off-hook condition, switching means are instructed to change the communication mode from the data communication into the telephone communication mode. The change in the communication mode is announced to an operator.

US-A-5,315,643 A describes a communication system constituted by connecting a plurality of telephones and a plurality of data communication apparatuses through a communication media. When the data communication apparatus receives data, a transmission side can designate a party to be called, and at a reception side, a telephone corresponding to the designated party can be called. In this communication system, an operator call is performed after transmission of all the image information is completed. When a control circuit provided at a central part of the communication system receives information indicating a telephone to be called of the other party from a telephone, the control circuit outputs a talking request signal to an apparatus of the party having a facsimile information field including the information indicating the telephone to be called. When the party's telephone response within a predetermined period of time and a response signal is received, a control signal is output to the telephone issuing talking request and a dummy tone generator is caused to generate a dummy bell tone. An operator response to this dummy bell tone and a DC loop is formed with the telephone line and depression of a talking switch is detected. After that outputting of the dummy bell tone is stopped and the channel is formed between the responding telephone and the party's telephone to allow communication there between.

### SUMMARY OF THE INVENTION

An object of the invention is to provide a facsimile machine capable of securely shifting the facsimile communication mode to the telephone conversation mode after facsimile communication even if an error occurs during facsimile communication, without having a telephone conversation reservation function.

The above object is according to the present invention solved by a facsimile machine having a telephone conversation function comprising sound emitting means for externally emitting a sound signal transmitted through a communication line and control means for keeping the occupation of the communication line for a predetermined time after a facsimile communication has been ended by a calling side and for controlling the sound emitting means to externally emit during said predetermined time a sound signal transmitted through the communication line (claim 1).

Advantageous developments thereof are defined in depending claims 2 to 8.

In the description the following terms are used relating to communication:
- "facsimile communication" relates exclusively to transmission of facsimile data;
- "telephone conversation" relates exclusively to normal telephone signal exchange;
- "communication" comprises all types of communication;
- "end of communication" defines a time when all types of communication has ended, normally indicated by a hook signal or a specific fax signal, whereafter communication between the station becomes impossible.

The term "end of conversation" is designating "end of communication".

According to the first aspect of the invention, the control means keeps the occupation of the communication line for a predetermined time after facsimile communication has been ended by a calling side and controls the sound emitting means to externally emit during said predetermined period a sound signal transmitted through the communication line, whereby the calling party side can easily recognize whether the receiving party side requests a call or not. Furthermore, in this state, shifting to the telephone conversation mode can be attained by performing simple operation such as lifting the handset. Therefore, even when no telephone conversation reservation function is available at the calling or receiving party side, and even if an error occurs during facsimile communication, shifting to the telephone conversation mode after the facsimile communication can be attained securely.

### BRIEF DESCRIPTION OF THE DRAWINGS

Other and further objects, features and advantages of the invention will be more explicit from the following detailed description taken with reference to the drawings wherein:
FIG. 1 is a schematic function block diagram showing an electric configuration of a facsimile machine in accordance with a first embodiment of the present invention;
FIG. 2 is a flowchart showing an example of operation control during facsimile communication at the facsimile machine;
FIG. 3 is a control sequence chart showing an example of operation control during facsimile communication at the facsimile machine;
FIG. 4 is a control sequence chart showing an example of operation control during facsimile communication at the facsimile machine;
FIG. 5 is a flowchart showing another example of operation control during facsimile communication at the facsimile machine;
FIG. 6 is a control sequence chart showing another example of operation control during facsimile communication at the facsimile machine;
FIG. 7 is a control sequence chart showing another example of operation control during facsimile communication at the facsimile machine;
FIG. 8 is a control sequence chart showing another example of operation control during facsimile communication at the facsimile machine;
FIG. 9 is a control sequence chart showing another example of operation control during facsimile communication at the facsimile machine;
FIG. 10 is a flowchart showing still another example of operation control during facsimile communication at the facsimile machine;
FIG. 11 is a control sequence chart showing still another example of operation control during facsimile communication at the facsimile machine;
FIG. 12 is a control sequence chart showing still another example of operation control during facsimile communication at the facsimile machine;
FIG. 13 is a schematic function block diagram showing an electric configuration of a facsimile machine in accordance with a second embodiment of the present invention;
FIG. 14 is a flowchart showing an example of operation control during facsimile communication at the facsimile machine;
FIG. 15 is a control sequence chart showing an example of operation control during facsimile communication at the facsimile machine;
FIG. 16 is a control sequence chart showing an example of operation control during facsimile communication at the facsimile machine;
FIG. 17 is a flowchart showing another example of operation control during facsimile communication at the facsimile machine;
FIG. 18 is a control sequence chart showing another example of operation control during facsimile communication at the facsimile machine; and
FIG. 19 is a control sequence chart showing another example of operation control during facsimile communication at the facsimile machine.

### DETAILED DESCRIPTION OF PREFERRED EMBODIMENT

Now referring to the drawings, preferred embodiments of the invention are described below.

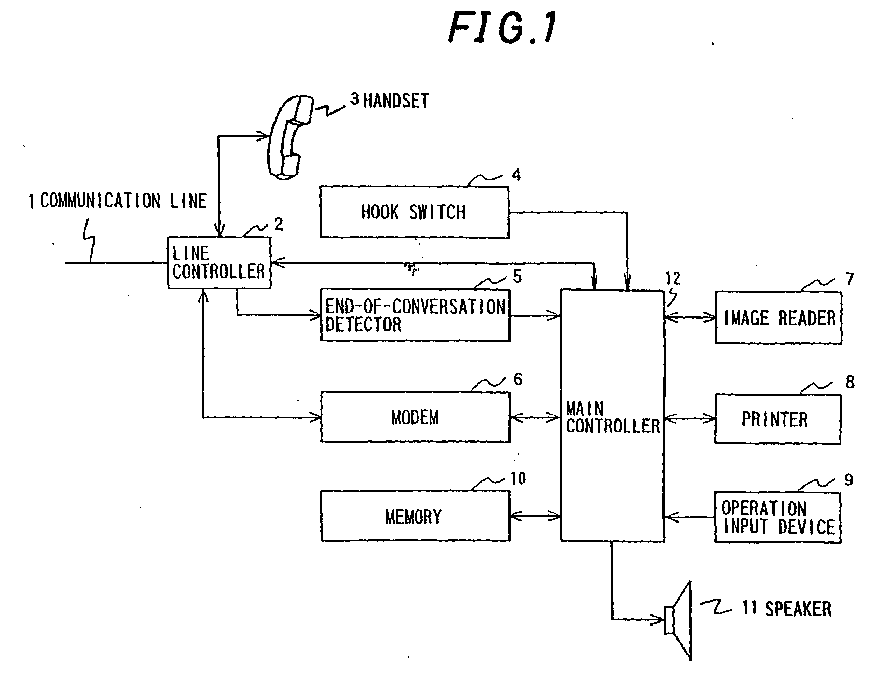

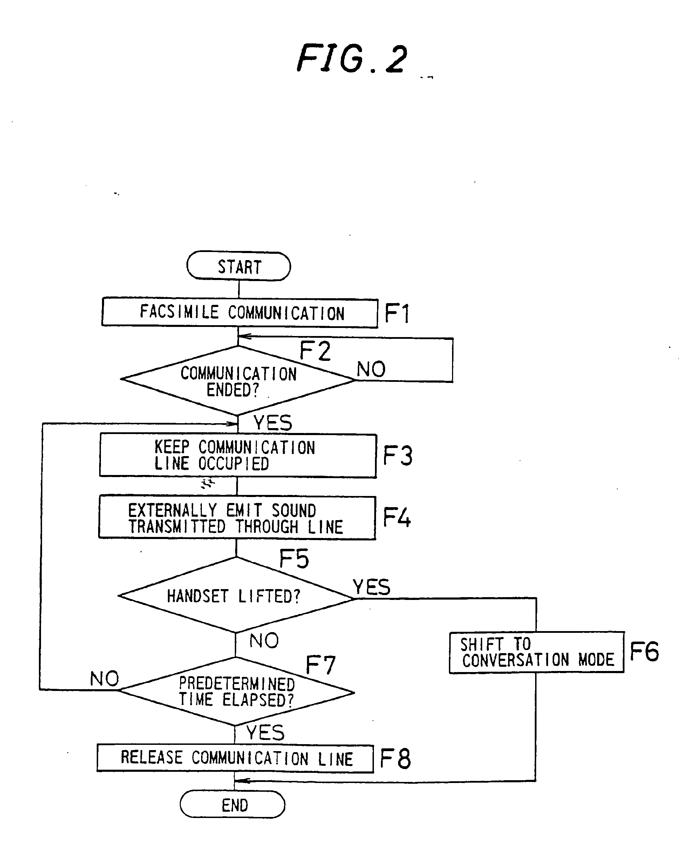

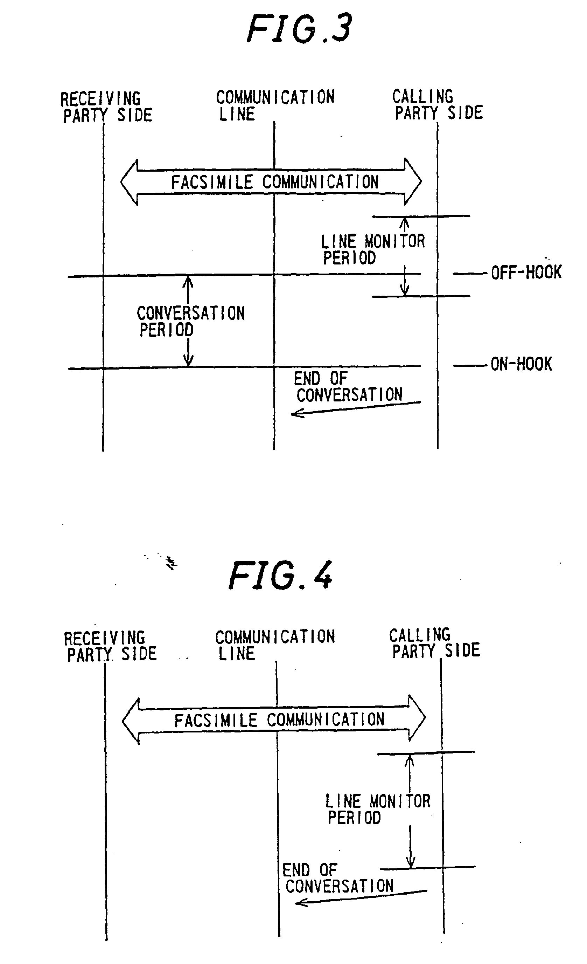

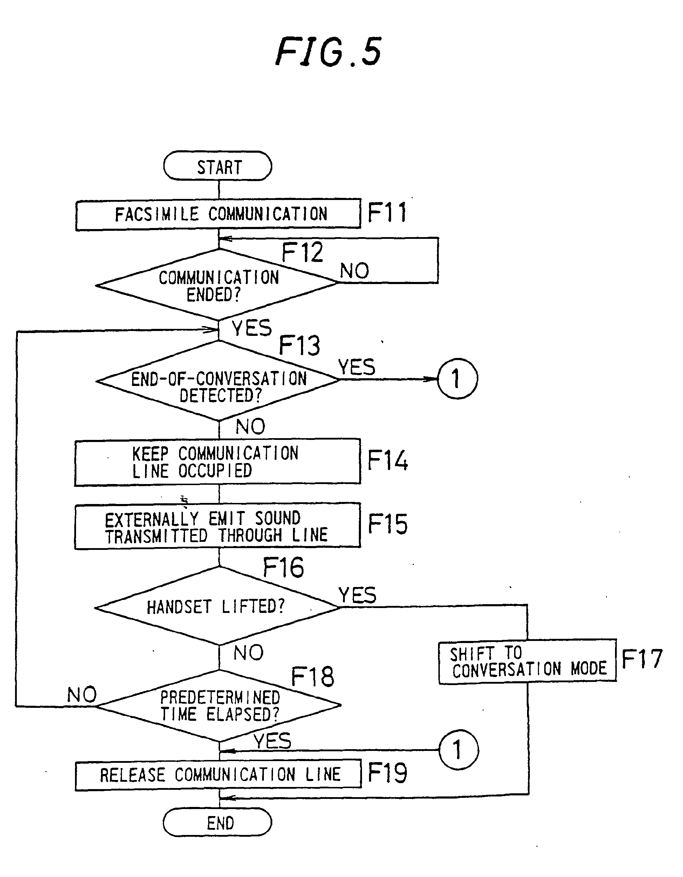

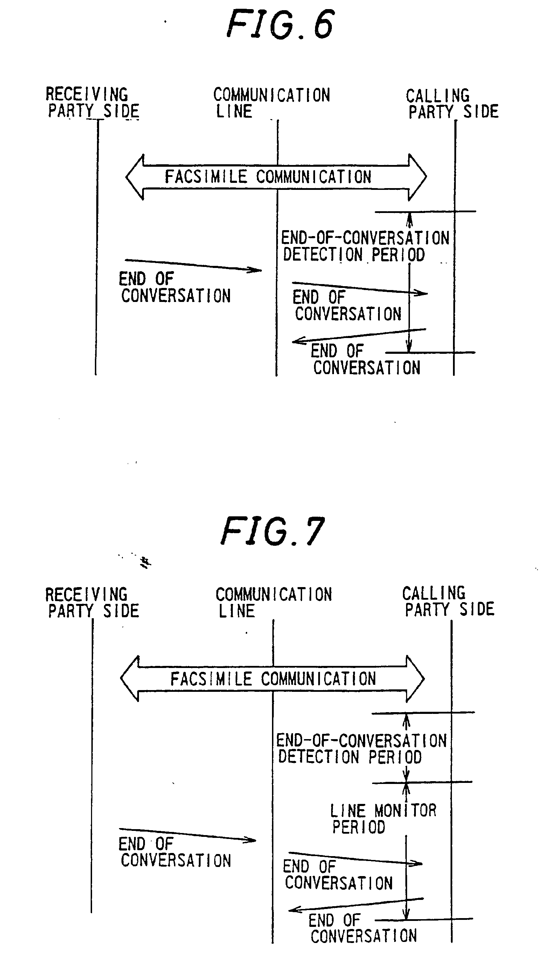

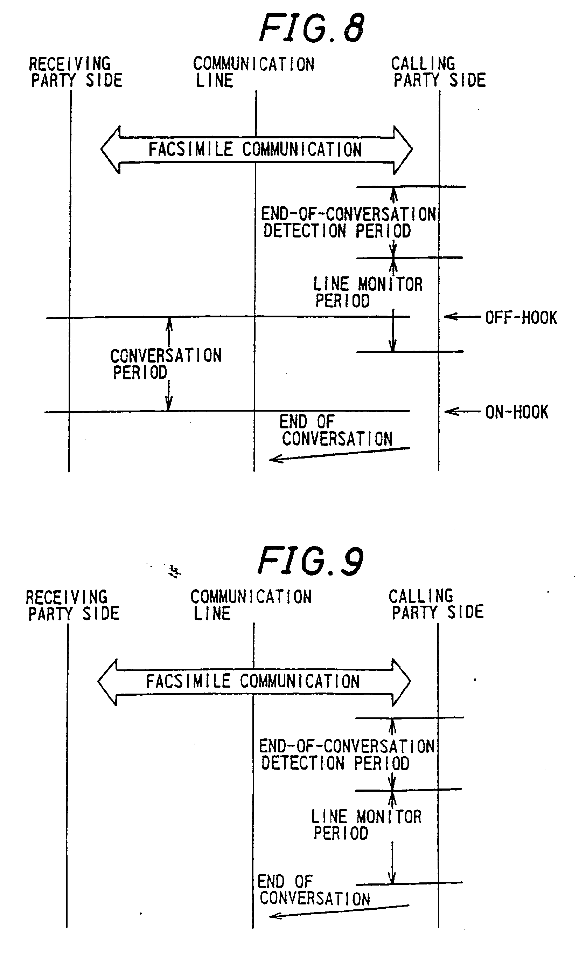

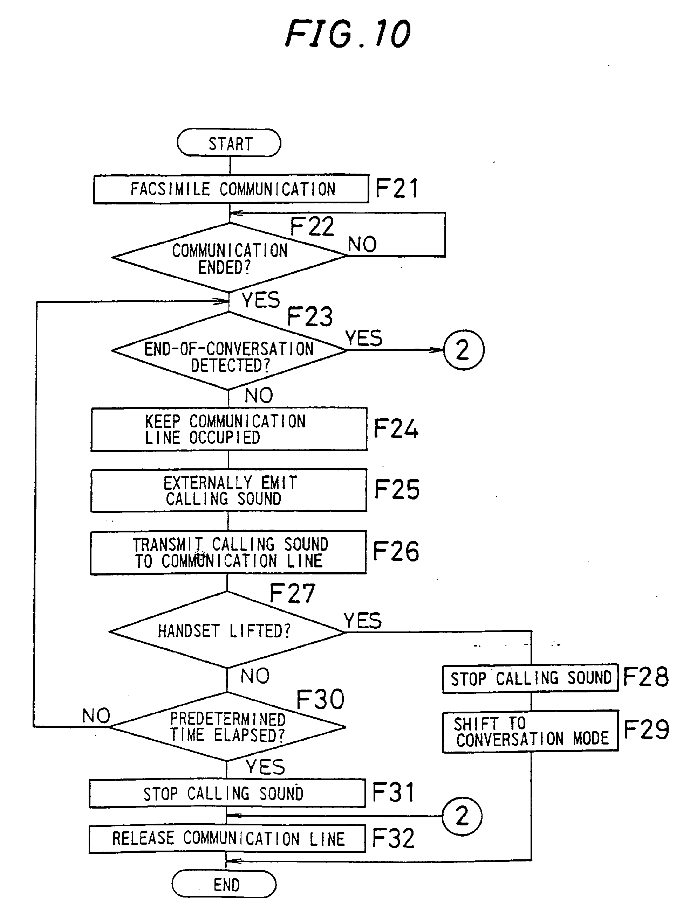

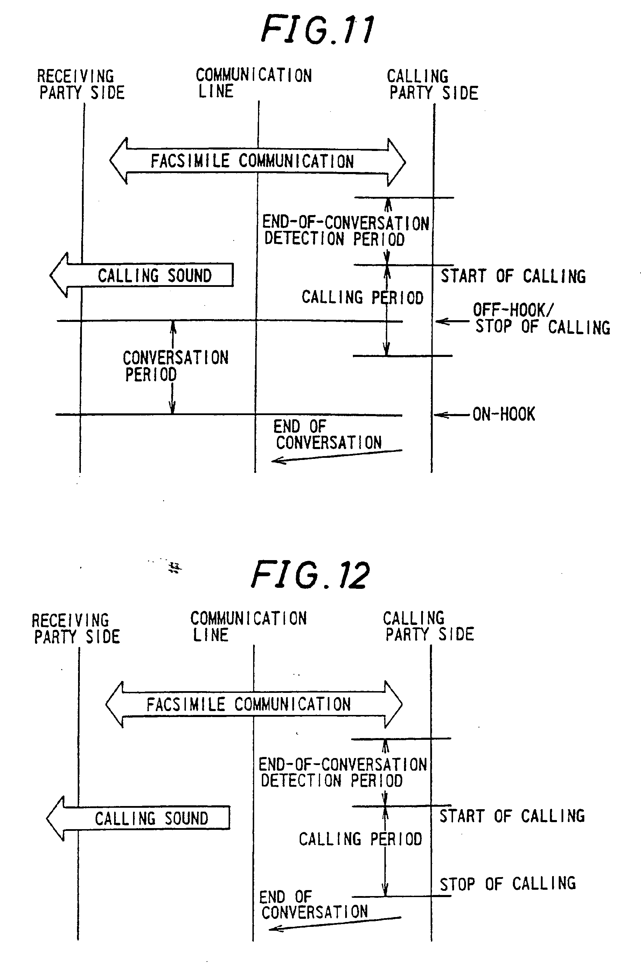

FIG. 1 is a schematic function block diagram showing an electric configuration of a facsimile machine in accordance with a first embodiment of the present invention; FIG. 2 is a flowchart showing an example of operation control during facsimile communication at the facsimile machine; FIGS. 3 and 4 are control sequence charts showing examples of operation control during facsimile communication at the facsimile machine; FIG. 5 is a flowchart showing another example of operation control during facsimile communication at the facsimile machine; FIGS. 6 to 9 are control sequence charts showing other examples of operation control during facsimile communication at the facsimile machine; FIG. 10 is a flowchart showing still another example of operation control during facsimile communication at the facsimile machine; FIGS. 11 and 12 are control sequence charts showing still another examples of operation control during facsimile communication at the facsimile machine.

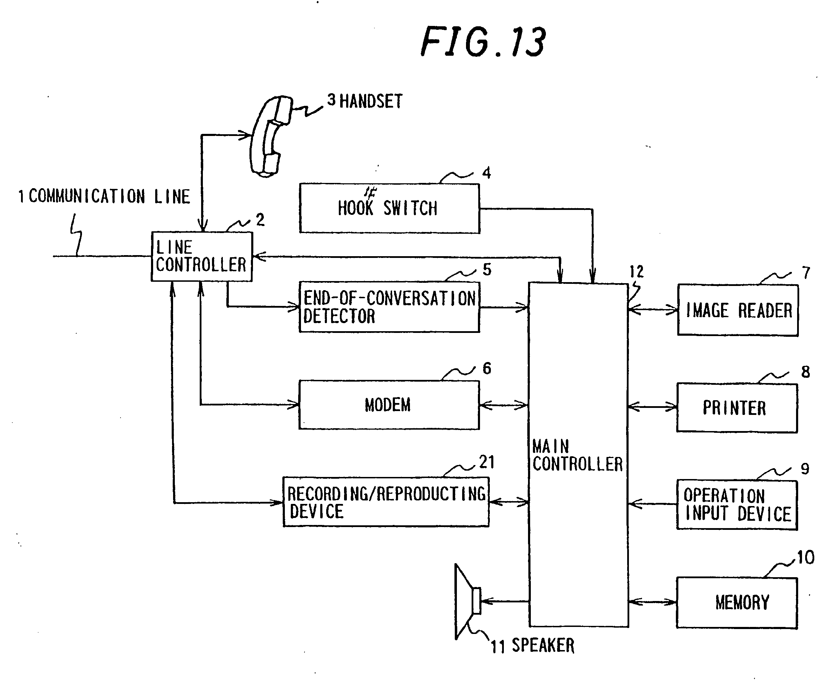

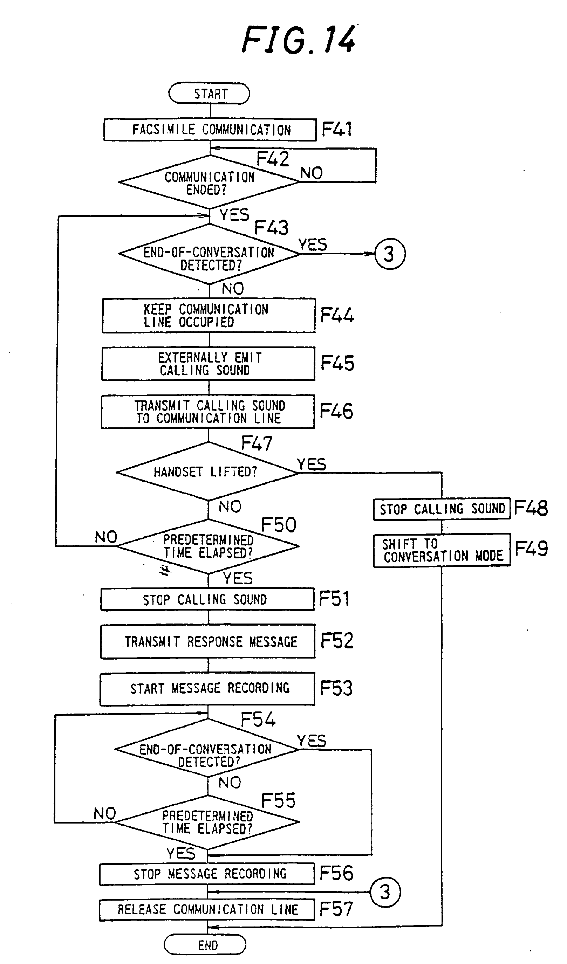

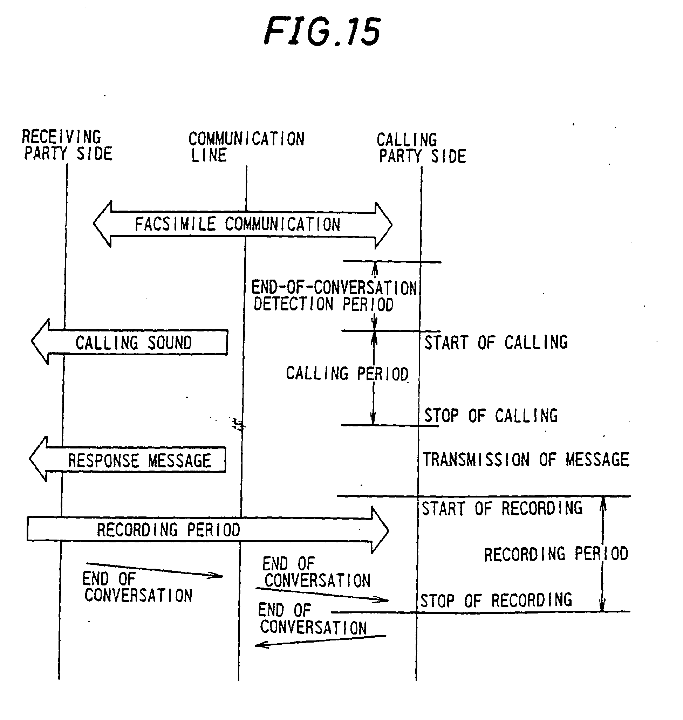

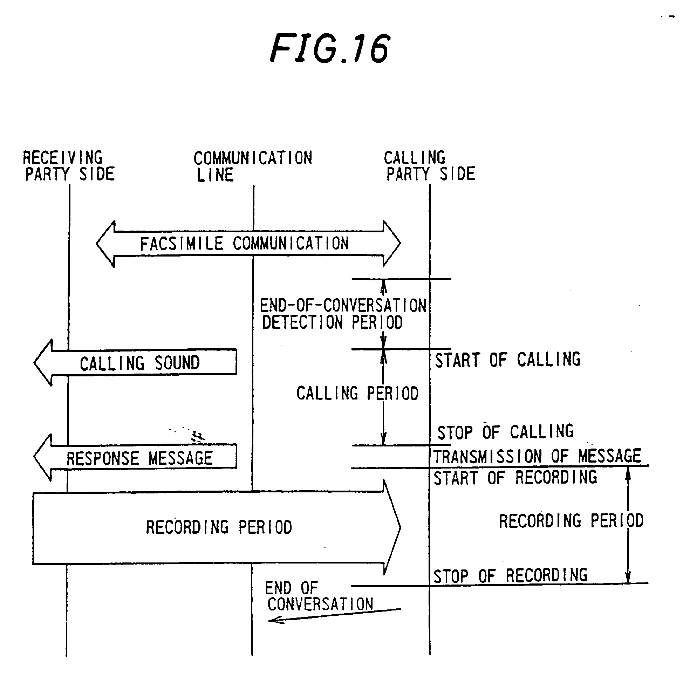

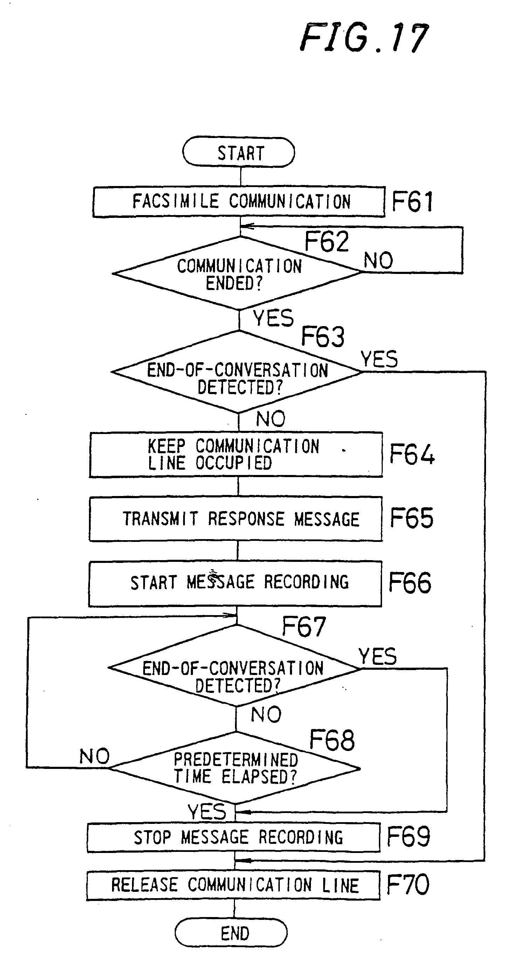

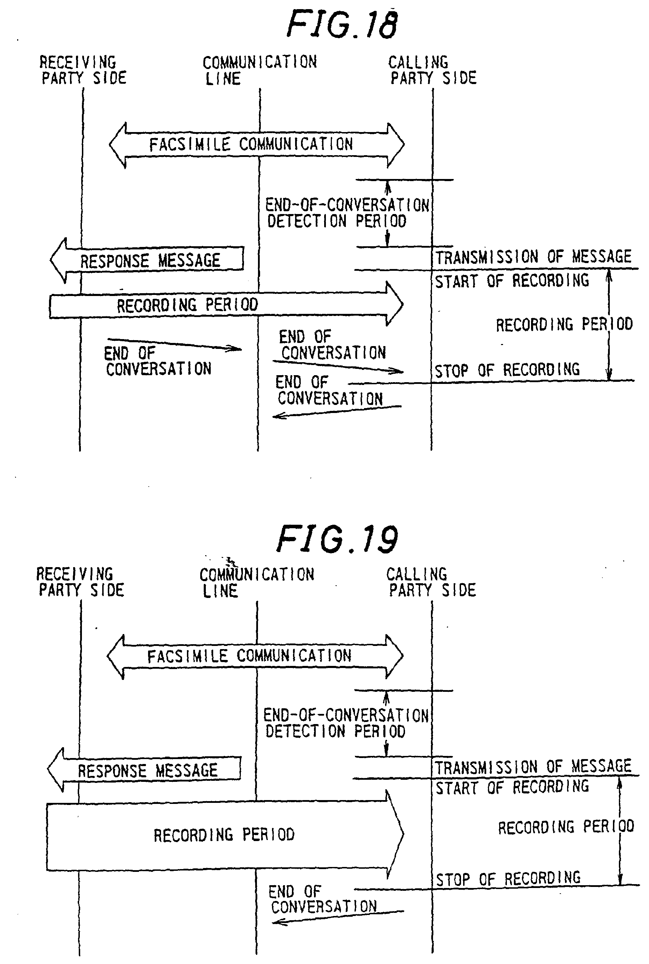

FIG. 13 is a schematic function block diagram showing an electric configuration of a facsimile machine in accordance with a second embodiment of the present invention; FIG. 14 is a flowchart showing an example of operation control during facsimile communication at the facsimile machine; FIGS. 15 and 16 are control sequence charts showing examples of operation control during facsimile communication at the facsimile machine; FIG. 17 is a flowchart showing another example of operation control during facsimile communication at the facsimile machine; and FIGS. 18 and 19 are control sequence charts showing other examples of operation control during facsimile communication at the facsimile machine.

### First embodiment

A first embodiment of the present invention is described below referring to FIGS. 1 to 12.

Referring to FIG. 1, numeral 1 represents a communication line connected to a receiving party side facsimile machine via an exchanger (not shown). Numeral 2 represents a line controller for occupying/releasing the communication line 1 and for forming a communication path to the receiving party side facsimile machine via the occupied communication line 1 and an exchanger (not shown). Numeral 3 represents a handset for performing a call to the receiving side facsimile machine via the communication path formed by the line controller 2. Numeral 4 is a hook switch for detecting the on-hook/off-hook condition of the handset 3.

Numeral 5 represents an end-of-conversation detector for detecting the end of conversation on the receiving party side facsimile machine on the basis of a signal transmitted from the communication line 1 via the line controller 2. Numeral 6 represents a modem for demodulating signals transmitted from the communication line 1 via the line controller 2 and for modulating signals to be transmitted to the communication line 1 via the line controller 2. Numeral 7 is an image reader for reading pictures and characters drawn on paper and for transmitting them as image data. Numeral 8 represents a printer for printing pictures and characters on predetermined paper on the basis of image data demodulated by the modem 6.

Numeral 9 represents an operation input device comprising function keys for instructing the start of facsimile reception and transmission, and numeric keys for entering telephone numbers of receiving party sides. Numeral 10 represents a memory for storing telephone numbers of receiving party sides, various setting conditions and predetermined program data. Numeral 11 represents a speaker for externally emitting sound by converting signals transmitted from the communication line 1 via the line controller 2.

Numeral 12 represents a main controller for performing line occupying/releasing control at the line controller 2, for performing reading control at the image reader 7, for performing printing control at the printer 8, for performing data reading/writing control at the memory 10 and for performing driving control at the speaker 11 on the basis of the detection results from the hook switch 4, the detection results from the end-of-conversation detector 5, signals demodulated by the modem 6, operation instructions from the operation input device 9 and data stored in the memory 10.

In the facsimile machine having the above-mentioned structure, an example of operation during facsimile communication is first described below referring to a flow chart shown in FIG. 2 and timing charts shown in FIGS. 3 and 4.

When the calling party lifts the handset 3 and the lifting of the handset 3 is detected by the hook switch 4, the main controller 12 controls the line control circuit 2 to occupy the communication line 1. When the calling party then enters the telephone number of a receiving party side by operating the operation input device 9, the main controller 12 generates dial pulses or a DTMF signal corresponding to the signal from the operation input device 9, and transmits the dial pulses or the DTMF signal to the communication line 1 occupied by the line controller 2. After this, the receiving party side facsimile machine occupies the communication line 1 in response to the call by the calling party side facsimile machine. As a result, the calling party side facsimile machine is connected to the receiving party side facsimile machine. In this communication connection condition, predetermined signals are transmitted between the calling party side facsimile machine and the receiving party side facsimile machine, and facsimile communication starts.

In the condition wherein the calling party side facsimile machine is called by the receiving party side facsimile machine, and the speaker 11 externally emits a calling sound, when the calling party lifts the handset 3 and the lifting of the handset 3 is detected by the hook switch 4, the main controller 12 controls the line controller 2 to occupy the communication line 1. Consequently, the calling party side facsimile machine is connected to the receiving party side facsimile machine. In this communication connection condition, predetermined signals are transmitted between the calling party side facsimile machine and the receiving party side facsimile machine, and facsimile communication starts.

Facsimile communication is started at step F1 by the above-mentioned operation control. In case image data to be transmitted is completely transmitted or when a communication error occurs because of paper jamming at step F2, facsimile communication is judged to have been stopped or not through the transmission of predetermined signals between the calling party side facsimile machine and the receiving party side facsimile machine. When communication is judged to have been stopped, the sequence proceeds to step F3, and the main controller 12 keeps occupying the communication line 1 occupied by the line controller 2. At step F4, the signal sound on the communication line 1 having been kept occupied is externally emitted from the speaker 11.

At this time, depending on the signal sound on the communication line 1, which is externally emitted by the speaker 11, the calling party can recognize whether the receiving party requests a call or not. In other words, when a sound indicating the end of conversation is emitted from the speaker 11, the calling party can recognize that the receiving party does not request any call. When a calling sound, for example, other than the sound indicating the end of the conversation on the receiving party side is emitted or when no sound is emitted, the calling party can recognize that the receiving party requests a call.

At step F5, when the calling party recognizes that the receiving party requests a call and lifts the handset 3, the lifting of the handset 3 is detected by the hook switch 4, and the sequence proceeds to step F6. The main controller 12 controls the line controller 2 to enable conversation with the receiving party side facsimile machine whose handset 3 has been lifted and to stop communication operation.

On the other hand, at step F5 in the condition that the signal sound on the communication line 1 is externally emitted by the speaker 11, when the calling party does not lift the handset and a predetermined time elapses at step F7, the sequence proceeds to step F8. At step F8, the main controller 12 controls the line controller 2 to release the communication line 1 and to stop communication operation. If the predetermined time does not elapse at step F7, the sequence returns to F3.

In accordance with the above-mentioned operation control, when facsimile communication between the calling party side facsimile machine and the receiving party side facsimile machine is stopped in case image data to be transmitted is completely transmitted or when a communication error occurs because of paper jamming, the calling party can recognize whether the receiving party requests a call, and on the basis of this recognition the calling party can carry out conversation with the receiving party by performing simple operation.

Next, another example of operation during facsimile communication in the facsimile machine having the above-mentioned structure is described below referring to a flowchart shown in FIG. 5 and control sequence charts shown in FIGS. 6 to 9.

After step F11 wherein facsimile communication is started, when facsimile communication is stopped through the transmission of predetermined signals between the calling party side facsimile machine and the receiving party side facsimile machine in case image data to be transmitted is completely transmitted or when a communication error occurs because of paper jamming at step F12, the sequence proceeds to step F13. The main controller 12 judges whether a signal indicating the end of conversation on the receiving party side and transmitted from the communication line 1 occupied by the line controller 2 is detected by the end-of-conversation detector 5. When the main controller 12 judges that the receiving party has ended conversation on the basis of the detection signal from the end-of-conversation detector 5, the sequence proceeds to step F19. At step F19, the main controller 12 controls the line controller 2 to release the communication line 1 and to stop communication operation. When the main controller 12 judges that the receiving party does not stop conversation, the sequence proceeds to step F14. At step F14, the line controller 2 keeps occupying the occupied communication line 1. At step F15, the signal sound on the occupied communication line 1 is externally emitted by the speaker 11.

At this time, the calling party can recognize whether the receiving party requests a call or not depending on whether the signal sound on the communication line 1 is externally emitted by the speaker 11 or not. In other words , when the receiving party ends conversation, the communication line 1 is released by the end-of-conversation signal transmitted from the communication line 1. Only when the receiving party does not end conversation, a calling sound, for example, other than the sound indicating the end of the conversation on the receiving party side is emitted from the speaker 11.

At step F16, in accordance with the signal sound on the communication line 1 emitted by the speaker 11, the calling party recognizes that the receiving party requests a call, and lifts the handset. When the lifting of the handset 3 is detected by the hook switch 4, the sequence proceeds to step F17. At step F17, the main controller 12 controls the line controller 2 to enable the conversation with the receiving party side facsimile machine via the handset 3 and to stop communication operation.

On the other hand, at step F16 in the condition that the signal sound on the communication line 1 is externally emitted by the speaker 11, when the calling party does not lift the handset and a predetermined time elapses at step F18, the sequence proceeds to step F19. At step F19, the main controller 12 controls the line controller 2 to release the communication line 1 and to stop communication operation. If the predetermined time does not elapse at step F18, the sequence returns to F13.

In accordance with the above-mentioned operation control, when facsimile communication between the calling party side facsimile machine and the receiving party side facsimile machine is stopped in case image data to be transmitted is completely transmitted or when a communication error occurs because of paper jamming, the calling party can recognize whether the receiving party requests a call, and on the basis of this recognition the calling party can carry out conversation with the receiving party by performing simple operation.

Next, a still another example of operation during facsimile communication in the facsimile machine having the above-mentioned structure is described below referring to a flowchart shown in FIG. 10 and control sequence charts shown in FIGS. 11 and 12.

After step F21 wherein facsimile communication is started, when facsimile communication is stopped through the transmission of predetermined signals between the calling party side facsimile machine and the receiving party side facsimile machine in case image data to be transmitted is completely transmitted or when a communication error occurs because of paper jamming at step F22, the sequence proceeds to step F23. The main controller 12 judges whether a signal indicating the end of conversation on the receiving party side and transmitted from the communication line 1 occupied by the line controller 2 is detected by the end-of-conversation detector 5. When the main controller 12 judges that the receiving party has ended conversation on the basis of the detection signal from the end-of-conversation detector 5, the sequence proceeds to step F32. At step F32, the main controller 12 controls the line controller 2 to release the communication line 1 and to stop communication operation. When the main controller 12 judges that the receiving party does not end conversation, the sequence proceeds to step F24. At step F24, the line controller 2 keeps occupying the occupied communication line 1. At step F25, a calling sound is generated and supplied to the occupied communication line 1 and the speaker 11, and transmitted to the receiving party side facsimile machine via the communication line 1. Furthermore, at step F26, the calling sound is externally emitted by the speaker 11.

At this time, depending on whether a calling sound is externally emitted by the speaker 11, the calling party can recognize whether the receiving party requests a call or not, and the receiving party can recognize whether calling is carried out or not depending on the calling sound transmitted from the communication line 1. The sound transmitted to the receiving side facsimile machine via the communication line 1 is not limited to the calling sound. It is possible to use a message, such as "Now, calling," may be transmitted. In addition, after transmitting such a message, a calling sound may be transmitted.

At step F27, when the calling party recognizes that the receiving party requests a call depending on the calling sound emitted by the speaker 11 and lifts the handset 3, the lifting of the handset 3 is detected by the hook switch 4, and the sequence proceeds to step F28. The main controller 12 stops generating the calling sound, and at step F29 controls the line controller 2 to enable conversation with the receiving party side facsimile machine via the handset 3 and to stop communication operation.

On the other hand, at step F27 in the condition that the calling sound is externally emitted by the speaker 11, when the calling party does not lift the handset and a predetermined time elapses at step F30, the sequence proceeds to step F31. At step F31, the main controller 12 stops generating the calling sound. At step F32, the main controller 12 controls the line controller 2 to release the communication line 1 and to stop communication operation. If the predetermined time does not elapse at step F30, the sequence returns to F23.

In accordance with the above-mentioned operation control, when facsimile communication between the calling party side facsimile machine and the receiving party side facsimile machine is stopped in case image data to be transmitted is completely transmitted or when a communication error occurs because of paper jamming, the calling party can recognize whether the receiving party requests a call, and on the basis of this recognition the calling party can carry out conversation with the receiving party by performing simple operation. In addition, the calling party can recognize that calling is performed on the receiving party side.

### Second embodiment

A second embodiment of the present invention is described below referring to FIGS. 13 to 19.

The components shown in FIG. 13 and corresponding to those shown in FIG. 1 are represented by the same reference codes, and not described below.

In FIG. 13, numeral 21 represents a recording/reproducing device which records signals transmitted from the communication line 1 via the line controller 2 on the basis of operation control by the main controller 12, and reproduces the signals having been recorded or prerecorded.

In the facsimile machine having the above-mentioned structure, an example of operation during facsimile communication is described below referring to a flowchart shown in FIG. 14 and control sequence charts shown in FIGS. 15 and 16.

After step F41 wherein facsimile communication is started, when facsimile communication is stopped through the transmission of predetermined signals between the calling party side facsimile machine and the receiving party side facsimile machine in case image data to be transmitted is completely transmitted or when a communication error occurs because of paper jamming at step F42, the sequence proceeds to step F43. The main controller 12 judges whether a signal indicating the end of conversation on the receiving party side and transmitted from the communication line 1 occupied by the line controller 2 is detected by the end-of-conversation detector 5. When the main controller 12 judges that the receiving party has ended conversation on the basis of the detection signal from the end-of-conversation detector 5, the sequence proceeds to step F57. At step F57, the main controller 12 controls the line controller 2 to release the communication line 1 and to stop communication operation. When the main controller 12 judges that the receiving party does not end conversation, the sequence proceeds to step F44. At step F44, the line controller 2 keeps occupying the occupied communication line 1, and the sequence proceeds to step F45. At step F45, a calling sound is generated and supplied to the occupied communication line 1 and the speaker 11, and transmitted to the receiving party side facsimile machine via the communication line 1. The sequence proceeds to step F46. At step F46, the calling sound is externally emitted by the speaker 11.

At this time, depending on whether a calling sound is externally emitted by the speaker 11, the calling party can recognize whether the receiving party requests a call or not, and the receiving party can recognize whether calling is carried out or not depending on the calling sound transmitted from the communication line 1. The sound transmitted to the receiving side facsimile machine via the communication line 1 is not limited to the calling sound. It is possible to use a message, such as "Now, calling," may be transmitted. In addition, after transmitting such a message, a calling sound may be transmitted.

At step F47, when the calling party recognizes that the receiving party requests a call depending on the calling sound emitted by the speaker 11 and lifts the handset 3, the lifting of the handset 3 is detected by the hook switch 4, and the sequence proceeds to step F48 . At step F48, the main controller 12 stops generating the calling sound. At step F49, the main controller 12 controls the line controller 2 to enable conversation with the receiving party side facsimile machine via the handset 3 and to stop communication operation.

On the other hand, at step F47 in the condition that the calling sound is externally emitted by the speaker 11, when the calling party does not lift the handset and a predetermined time elapses at step F50, the sequence proceeds to step F51. At step F51, the main controller 12 stops generating the calling sound. At step F52, the main controller 12 controls the recording/reproducing device 21 so that a message, such as "Nobody is around here. Please leave your message." indicating the start of message recording and having been recorded in the recording/reproducing device 21 is emitted and transmitted to the communication line 1 having been kept occupied. At step F53, the recording/reproducing device 21 starts recording a message transmitted from the communication line 1. If the predetermined time does not elapse at step F50, the sequence returns to F43.

After the start of recording the message, when the main controller 12 judges that the receiving party has ended conversation on the basis of the detection signal from the end-of-conversation detector 5 at step F54, or when the main controller 12 judges that a predetermined time has elapsed at step F55, the sequence proceeds to step F56. At step F56, the main controller 12 controls the recording/reproducing device 21 to stop recording the message. At step 57, the main controller 12 controls the line controller 2 to release the communication line 1 and to stop communication operation. If the predetermined time does not elapse at step F55, the sequence returns to F54.

In accordance with the above-mentioned operation control, when facsimile communication between the calling party side facsimile machine and the receiving party side facsimile machine is stopped in case image data to be transmitted is completely transmitted or when a communication error occurs because of paper jamming, the calling party can recognize whether the receiving party requests a call. Even when the receiving party requests a call, and if the calling party does not respond to the call, the calling party notifies the receiving party that the calling party does not respond. After this, a message from the receiving party can be recorded.

In the facsimile machine having the above-mentioned structure, another example of operation during facsimile communication is described below referring to a flowchart shown in FIG. 17 and control sequence charts shown in FIGS. 18 and 19.

After step F61 wherein facsimile communication is started, when facsimile communication is stopped through the transmission of predetermined signals between the calling party side facsimile machine and the receiving party side facsimile machine in case image data to be transmitted is completely transmitted or when a communication error occurs because of paper jamming at step F62, the sequence proceeds to step F63. The main controller 12 judges whether a signal indicating the end of conversation on the receiving party side is detected by the end-of-conversation detector 5 from the communication line 1 occupied by the line controller 2. When the main controller 12 judges that the receiving party has ended conversation on the basis of the detection signal from the end-of-conversation detector 5, the sequence proceeds to step F70. At step F70, the main controller 12 controls the line controller 2 to release the communication line 1 and to stop communication operation. When the main controller 12 judges that the receiving party does not end conversation, the sequence proceeds to step F64. At step F64, the line controller 2 keeps occupying the occupied communication line 1. At step F65, the main controller 12 controls the recording/reproducing device 21 so that a message, such as "Please leave your message." indicating the start of recording a message and prerecorded in the recording/reproducing device 21 is generated and transmitted to the communication line 1 having been kept occupied. At step F66, the recording/reproducing device 21 starts recording a message transmitted from the communication line 1.

After the start of recording the message, when the main controller 12 judges that the receiving party has ended conversation on the basis of the detection signal from the end-of-conversation detector 5 at step F67, or when the main controller 12 judges that a predetermined time has elapsed at step F68, the sequence proceeds to step F69. At step F69, the main controller 12 controls the recording/reproducing device 21 to stop recording the message. At step 70, the main controller 12 controls the line controller 2 to release the communication line 1 and to stop communication operation. If the predetermined time does not elapse at step F68, the sequence returns to F67.

In accordance with the above-mentioned operation control, when facsimile communication between the calling party side facsimile machine and the receiving party side facsimile machine is stopped in case image data to be transmitted is completely transmitted or when a communication error occurs because of paper jamming, and when the receiving party requests a call, a message can be recorded from the receiving party.

## Claims

1. A facsimile machine having a telephone conversation function, comprising:
sound emitting means (11) for externally emitting a sound signal transmitted through a communication line (1), and
control means (12) for keeping (F3) the occupation of the communication line (1) for a predetermined time after a facsimile communication has been ended by a calling side and for controlling the sound emitting means (11) to externally emit during said predetermined time a sound signal transmitted through the communication line (1).

2. The facsimile machine according to claim 1, wherein said facsimile machine further comprises:
detecting means (5) for detecting when a receiving party's terminal ends communication, and wherein said control means (12) keeps said occupation of the communication line (1) until the detecting means (5) detects that the receiving party has ended the communication after the facsimile communication.

3. The facsimile machine according to claim 2, wherein it further comprises:
calling means for transmitting a calling sound through the communication line, wherein said control means (12) is arranged for controlling the sound emitting means (11) to externally emit the calling sound if the predetermined time has not lapsed or if the detection means (5) has not detected the end of communication at the receiving party's terminal until said predetermined time has lapsed.

4. The facsimile machine of claim 3, wherein when the telephone conversation function is not activated until the detecting means (5) detects the end of communication on the receiving party side terminal after facsimile communication, the control means (12) releases the communication line (1) after the lapse of the predetermined time, and controls the calling means (11) to stop generating the calling sound.

5. The facsimile machine of claim 3, wherein when the telephone conversation function is not activated until the detecting means (5) detects the end of communication on the receiving party's side terminal after facsimile communication, the control means (12) releases the communication line (1) after the lapse of the predetermined time, and controls the sound emitting means to stop the sound output.

6. The facsimile machine of claim 3, further comprising:
phone-answering means (21) for recording signal sounds transmitted through the communication line,
wherein when the telephone conversation function is not activated until the detecting means (5) detects the end of communication on the receiving party's side terminal after facsimile communication, the control means (12) controls the calling means (11) to stop generating the sound calling, and also controls the phone-answering means (21) to record signal sounds transmitted through the communication line.

7. The facsimile machine of claim 3, further comprising phone-answering means (21) for recording signal sounds transmitted through the communication line, wherein when the telephone conversation function is not activated until the detecting means (5) detects the end of communication on the receiving party side terminal after facsimile communication, the control means (12) controls the sound emitting means to stop delivering the sound output, and also controls the phone-answering means (21) to record signal sounds transmitted through the communication line.

8. The facsimile machine of claim 6 or 7, wherein the phone-answering means (21) sends a predetermined message to the communication line (1) before recording signal sounds transmitted through the communication line.

## Patentansprüche

1. Faksimilegerät mit Telefonfunktion, das aufweist:
eine Tonausgabeeinrichtung (11) zum Ausgeben eines über eine Kommunikationsleitung (1) übermittelten Tonsignals nach außen, und
eine Steuereinrichtung (12) zum Aufrechterhalten (F3) der Belegung der Kommunikationsleitung (1) für eine vorbestimmte Zeit nach dem Beenden einer Faksimilekommunikation durch eine Anruferseite und zum Steuern der Tonausgabeeinrichtung (11) zum Ausgeben eines über die Kommunikationsleitung (1) übermittelten Tonsignals nach außen während der vorbestimmten Zeit.

2. Faksimilegerät nach Anspruch 1, wobei das Faksimilegerät zudem aufweist:
eine Detektiereinrichtung (5) zum Detektieren des Beendens der Kommunikation über den Anschluss einer empfangenden Partei, wobei die Steuereinrichtung (12) die Belegung der Kommunikationsleitung (1) aufrechterhält bis die Detektiereinrichtung (5) feststellt, dass die empfangende Partei die Kommunikation nach der Faksimilekommunikation beendet hat.

3. Faksimilegerät nach Anspruch 2, das zudem aufweist:
eine Anrufeinrichtung zum Übermitteln eines Anruftons über die Kommunikationsleitung, wobei die Steuereinrichtung (12) der Steuerung der Tonausgabeeinrichtung (11) zum Ausgeben des Anruftons nach außen dient, sofern die vorbestimmte Zeit noch nicht abgelaufen ist oder die Detektiereinrichtung (5) bis zum Ablauf der vorbestimmten Zeit das Ende der Kommunikation am Anschluss der empfangenden Partei nicht festgestellt hat.

4. Faksimilegerät nach Anspruch 3, wobei die Steuereinrichtung (12) die Kommunikationsleitung (1) nach dem Ablaufen der vorbestimmten Zeit freigibt und die Anrufeinrichtung (11) zum Abbruch des Erzeugens des Anruftons steuert, falls die Telefonfunktion nicht aktiviert ist bis die Detektiereinrichtung (5) nach der Faksimilekommunikation das Kommunikationsende auf der Seite des Anschlusses der empfangenden Partei detektiert.

5. Faksimilegerät nach Anspruch 3, wobei die Steuereinrichtung (12) die Kommunikationsleitung (1) nach dem Ablaufen der vorbestimmten Zeit freigibt und die Tonausgabeeinrichtung zum Abbruch der Tonausgabe steuert, falls die Telefonfunktion nicht aktiviert ist bis die Detektiereinrichtung (5) nach der Faksimilekommunikation das Ende der Kommunikation am Anschluss der Seite der empfangenden Partei detektiert.

6. Faksimilegerät nach Anspruch 3, das zusätzlich aufweist:
eine Anrufbeantwortereinrichtung (21) zum Aufzeichnen von über die Kommunikationsleitung übermittelten Signaltönen,
wobei die Steuereinrichtung (12) die Anrufeinrichtung (11) zum Abbruch des Erzeugens des Anruftons steuert und ebenso die Anrufbeantwortereinrichtung (21) zum Aufzeichnen der über die Kommunikationsleitung übermittelten Signaltöne steuert, falls die Telefonfunktion nicht aktiviert ist bis die Detektiereinrichtung (5) nach der Faksimilekommunikation das Kommunikationsende am Anschluss der Seite der empfangenden Partei detektiert.

7. Faksimilegerät nach Anspruch 3, zusätzlich aufweisend eine Anrufbeantwortereinrichtung (21) zum Aufzeichnen von über die Kommunikationsleitung übermittelten Signaltönen, wobei die Steuereinrichtung (12) die Tonausgabeeinrichtung zum Abbruch der Weitergabe der Tonausgabe steuert und ebenso die Anrufbeantwortereinrichtung (21) zum Aufzeichnen der über die Kommunikationsleitung übermittelten Signaltöne steuert, falls die Telefonfunktion nicht aktiviert ist bis die Detektiereinrichtung (5) nach der Faksimilekommunikation das Kommunikationsende am Anschluss der Seite der empfangenden Partei detektiert.

8. Faksimilegerät nach Anspruch 6 oder 7, wobei die Anrufbeantwortereinrichtung (21) vor dem Aufzeichnen der über die Kommunikationsleitung übermittelten Signaltöne eine vorbestimmte Nachricht an die Kommunikationsleitung (1) sendet.

## Revendications

1. Télécopieur ayant une fonction de conversation téléphonique, comprenant :
un moyen d'émission de son (11) destiné à émettre à l'extérieur un signal sonore transmis par une ligne de communication (1), et
un moyen de commande (12) destiné à maintenir (F3) l'occupation de la ligne de communication (1) pendant une période prédéterminée une fois qu'une communication de télécopie a pris fin à un côté d'appel et destiné à commander le moyen d'émission de son (11) pour émettre à l'extérieur, pendant ladite période prédéterminée, un signal sonore transmis par l'intermédiaire de la ligne de communication (1).

2. Télécopieur selon la revendication 1, dans lequel ledit télécopieur comprend en outre :
un moyen de détection (5) destiné à détecter lorsqu'un poste d'un correspondant récepteur met fin à la communication, et dans lequel ledit moyen de commande (12) maintient ladite occupation de la ligne de communication (1) jusqu'à ce que le moyen de détection (5) détecte que le correspondant récepteur a mis fin à la communication après la communication de télécopie.

3. Télécopieur selon la revendication 2 comprenant en outre :
un moyen d'appel destiné à transmettre un son d'appel par la ligne de communication, et dans lequel ledit moyen de commande (12) est agencé pour commander le moyen d'émission de son (11) pour émettre à l'extérieur le son d'appel si la période prédéterminée ne s'est pas écoulée ou si le moyen de détection (5) n'a pas détecté la fin de la communication au niveau du poste du correspondant récepteur avant que la période prédéterminée ne se soit écoulée.

4. Télécopieur selon la revendication 3, dans lequel, lorsque la fonction de conversation téléphonique n'est pas activée jusqu'à ce que le moyen de détection (5) détecte la fin de la communication sur le poste du côté du correspondant récepteur après la communication de télécopie, le moyen de commande (12) libère la ligne de communication (1) après l'écoulement de la période prédéterminée, et commande le moyen d'appel (11) pour qu'il arrête la génération du son d'appel.

5. Télécopieur selon la revendication 3, dans lequel, lorsque la fonction de conversation téléphonique n'est pas activée jusqu'à ce que le moyen de détection (5) détecte la fin de la communication sur le poste du côté du correspondant récepteur après la communication de télécopie, le moyen de commande (12) libère la ligne de communication (1) après l'écoulement de la période prédéterminée, et commande le moyen d'émission de son pour qu'il arrête la sortie du son.

6. Télécopieur selon la revendication 3, comprenant en outre :
un moyen de répondeur téléphonique (21) destiné à enregistrer des sons de signal transmis par l'intermédiaire de la ligne de communication,
dans lequel, lorsque la fonction de conversation téléphonique n'est pas activée jusqu'à ce que le moyen de détection (5) détecte la fin de la communication sur le poste du côté du correspondant récepteur après la communication de télécopie, le moyen de commande (12) commande le moyen d'appel (11) pour arrêter la génération de l'appel sonore, et commande également le moyen de répondeur téléphonique (21) pour enregistrer les sons de signal transmis par la ligne de communication.

7. Télécopieur selon la revendication 3, comprenant en outre un moyen de répondeur téléphonique (21) destiné à enregistrer des sons de signal transmis par la ligne de communication, dans lequel, lorsque la fonction de conversation téléphonique n'est pas activée jusqu'à ce que le moyen de détection (5) détecte la fin de la communication sur le poste du côté du correspondant récepteur après la communication de télécopie, le moyen de commande (12) commande le moyen d'émission de son pour arrêter la sortie du son, et commande également le moyen de répondeur téléphonique (21) pour enregistrer les sons de signal transmis par la ligne de communication.

8. Télécopieur selon la revendication 6 ou 7, dans lequel le moyen de répondeur téléphonique (21) envoie un message prédéterminé à la ligne de communication (1) avant d'enregistrer les sons de signal par la ligne de communication.
